# EUROPEAN PATENT SPECIFICATION

(11) **EP 3 514 793 B1**
(45) Date of publication and mention of the grant of the patent: **04.05.2022**
(21) Application number: 19153002.1
(22) Date of filing: 22.01.2019
(51) Int. Cl.: G10L 21/0216, G10L 21/0264

(54) **PREDICTIVE SPEECH ENHANCEMENT IN A VEHICLE**
PRÄDIKTIVE SPRACHVERBESSERUNG IN EINEM FAHRZEUG
AMÉLIORATION DE LA PAROLE PRÉDICTIVE DANS UN VÉHICULE

(30) Priority: 23.01.2018 US 201815877860
(43) Date of publication of application: 24.07.2019
(73) Proprietor: BlackBerry Limited, Waterloo, Ontario N2K 0A7 (CA)
(72) Inventor: ALFANO, Nicholas Patrick, Burnaby, British Columbia V5A 4W2 (CA); REMPEL, Rodney Dwight, Burnaby, British Columbia V5A 4W2 (CA)
(74) Representative: MERH-IP Matias Erny Reichl Hoffmann Patentanwälte PartG mbB

(56) References cited:
- EP-A1- 3 460 790
- US-A1- 2016 019 890
- US-A1- 2016 125 876
- US-A1- 2017 232 915

## Description

### TECHNICAL FIELD

The present technology relates generally to audio enhancement and, in particular, to voice or speech enhancement techniques to cancel noise heard/measured in a moving vehicle.

### BACKGROUND

Road vehicles such as cars, trucks, vans, motorcycles, etc. are often equipped with various speech-based subsystems such as hands-free telephony and speech recognition. The perceptual quality of a speech signal can be significantly degraded by unwanted ambient noise from sources such as the powertrain, tires, wind and rain. Noise cancellation may be accomplished using microphones that detect noise. A speech enhancement processor can use the detected noise to suppress some of the noise to thereby enhance the speech signal. However, due to the lag in activating a speech-enhancement processor to provide noise cancellation, the speech-enhancement processor may not be able to react quickly enough to sudden changes in noise, thus degrading the quality of the speech signal. For example, a road with a rough surface, a grated bridge or a tunnel will all cause a sudden change in noise that may degrade the speech signal or other audio signal.

It would thus be highly desirable to mitigate the effect of sudden changes in noise in order to enhance a voice signal or other audio signal inside a moving vehicle. Improvements in speech and audio enhancement technology are thus highly desirable.

EP 3460790 A1 concerns a selective sound system and a method for a vehicle.

US 2017/232915 A1 relates to a prediction system located within a vehicle and a method for a mode for a vehicle.

US 2016/019890 A1 is about a vehicle state-based hands-free phone noise reduction with learning capability.

US 2016/125876 A1 describes an acoustic environment recognizer and a speech signal enhancer for in-vehicle speech enhancement.

### SUMMARY

According to the present invention, there are provided a speech-enhancement system, as set forth in independent claim 1, and a corresponding method and non-transitory computer-readable medium, as set forth independent claims 4 and 6.

Preferred embodiments are set forth in the dependent claims.

### BRIEF DESCRIPTION OF THE DRAWINGS

Further features and advantages of the present technology will become apparent from the following detailed description, taken in combination with the appended drawings, in which:
FIG. 1 is a schematic depiction of a vehicle equipped with a predictive audio enhancement system.
FIG. 2 is a schematic depiction of the predictive audio enhancement system.
FIG. 3 is a schematic depiction of a vehicle equipped with the predictive audio enhancement system predicting and cancelling noise along a section of roadway.
FIG. 4 is a schematic depiction of a map showing various locations where noise has been predicted based upon self-learning or shared noise data.

It will be noted that throughout the appended drawings like features are identified by like reference numerals.

### DETAILED DESCRIPTION

Disclosed in the following description and illustrated in the drawings is an audio enhancement system, which may be more particularly a speech enhancement system (or voice enhancement system) for enhancing an audio signal such as a speech signal by suppressing unwanted noise that arises from the movement of a vehicle. In general, the system predicts an expected noise at a location and then prepares an audio enhancement processor (which may be a speech enhancement processor in one main implementation) to cancel or suppress noise based on the expected noise (or predicted noise) when passing by the location. By predicting the noise to be encountered, the system eliminates, or at least significantly mitigates, unwanted noise in an audio signal such as a speech signal. The enhanced audio signal can thus improve the quality of hands-free telephony, in-vehicle speech recognition, an in-vehicle sound system, or other application that utilizes the audio or speech signal.

Details and particulars of such signal enhancement will now be described below, by way of example, with reference to the drawings.

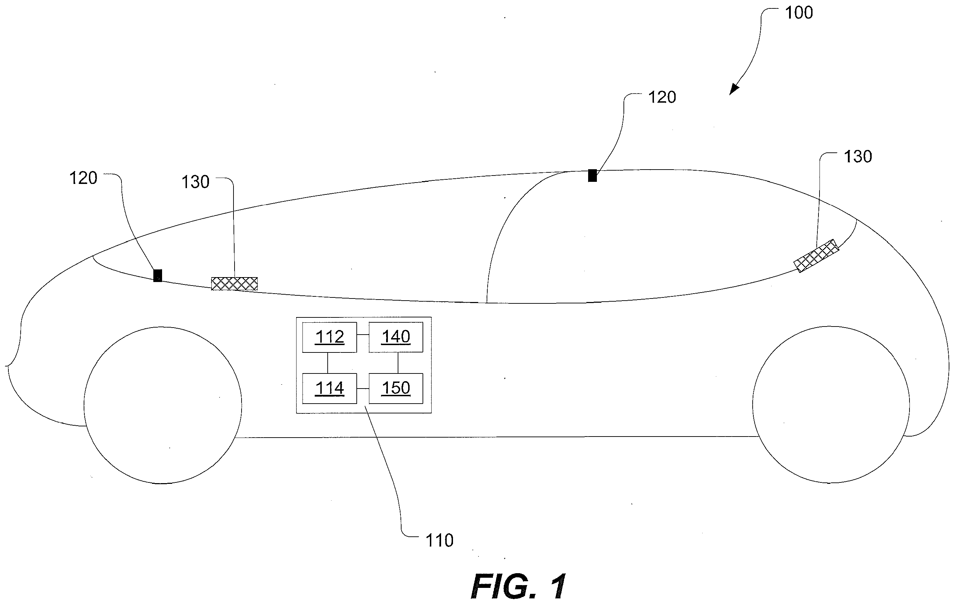

As illustrated by way of example in FIG. 1, a vehicle, such as an automobile, is equipped with an audio-enhancement system (e.g. a speech-enhancement system) that is configured to predict noise at a location and to cancel the noise when the vehicle moves through the location to thereby enhance an audio signal (e.g. a speech signal). The vehicle may be a car, truck, van, sports utility vehicle, bus, minibus, recreational vehicle, motorcycle or any other land-based vehicle. The vehicle may have an internal combustion engine or an electric motor. The vehicle may be self-driving or human-driven.

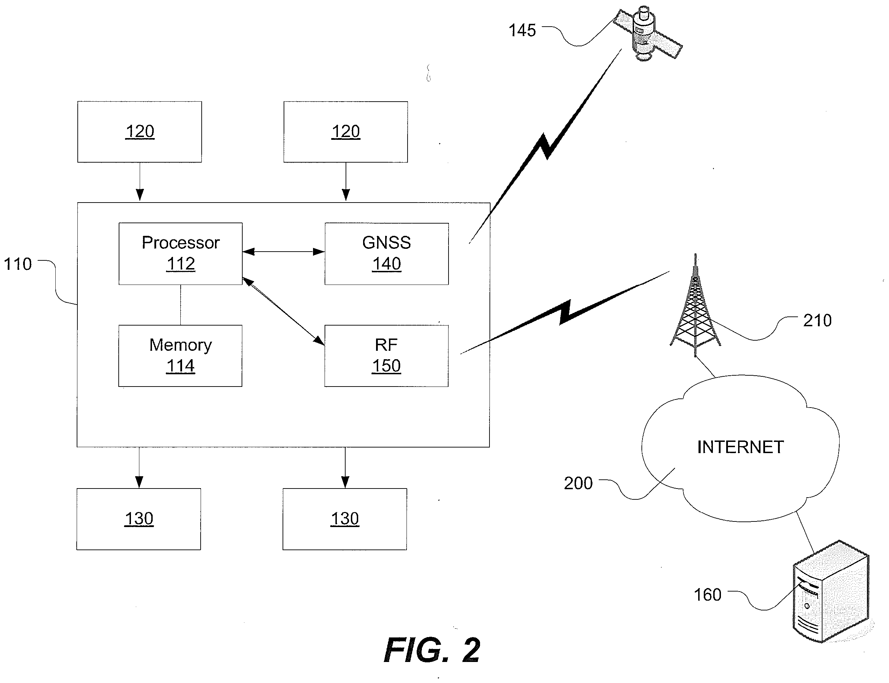

In the embodiment depicted by way of example in FIGS. 1 and 2, the vehicle generally designated by reference numeral 100 includes an audio enhancement system (e.g. a speech-enhancement system) 110. The audio/speech-enhancement system 110 includes an audio/speech-enhancement processor (e.g. a microprocessor) 112. The audio/speech-enhancement processor 112 (hereinafter referred to simply as the "processor") may be coupled to a memory 114 which may include volatile and non-volatile memory. The audio/speech-enhancement system 110 may be implemented in hardware, software or firmware or any suitable combination thereof. The audio/speech-enhancement system 110 may include a plurality of processors that execute separate tasks, e.g. one processor performing speech recognition, one processor performing prediction and another processor performing noise cancellation (i.e. speech signal enhancement). Alternatively, the audio/speech-enhancement system 110 may include one or more application-specific integrated circuits (ASICs). The audio/speech-enhancement system 110 may also be implemented on a computer, computing device or integrated into an existing vehicle processor or computer. Further details of the audio/speech-enhancement system 110 are illustrated schematically in FIG. 2.

In the embodiment depicted in FIGS. 1 and 2, the audio/speech-enhancement system 110 includes, or cooperates with, a location-determining subsystem 140 configured to determine a first location of the vehicle and to generate location data representing the first location of the vehicle. The location data may be, for example, coordinates of latitude and longitude. In various embodiments, the location-determining subsystem is a Global Navigation Satellite System receiver such as, for example, a Global Positioning System (GPS) receiver. The GNSS receiver 140 decodes multiple GNSS signals from orbiting satellites 145 to determine the location of the vehicle. Positioning accuracy may be improved and augmented using techniques such as Aided-GPS and Assisted-GPS.

In the embodiment illustrated in FIG. 1, the vehicle 100 may include one or more microphones 120 for generating an analog or digital speech signal from the sound waves of a user's voice. The microphones 120 may be used for hands-free telephony and/or speech recognition for voice commands. The vehicle may also include one or more speakers 130 for hands-free telephony.

In one embodiment, the audio/speech-enhancement system 110 cancels noise based solely on the predicted or expected noise (without measuring any actual in-cabin noise using the microphones 120). In another embodiment, the speech-enhancement system 110 cancels noise based on both the actual in-cabin noise measured by the microphones 120 and the expected/predicted noise.

In the embodiment depicted in FIGS. 1 and 2, the audio/speech-enhancement system 110 implements a noise-predicting algorithm executed by the processor 112. The processor 112 is communicatively coupled to the location-determining subsystem 140 for receiving the location data from the location-determining subsystem. The processor is configured to predict expected noise at a second location corresponding to a predicted location of the vehicle. The processor 112 is further configured to suppress at least some of the expected noise to thereby enhance the audio/speech signal when the vehicle is at the second location.

In one embodiment, the memory 114 coupled to the processor 112 is used to store noise data for a route. The noise data may be collected by the vehicle or obtained from an external source, e.g. another vehicle, as will be described below. Noise data may be stored for a plurality of locations along a route. Noise data may include a noise frequency spectrum and location coordinates. In a variant, the noise data may be time-specific as well. For example, some noise may only occur at certain times of day, e.g. a construction site that is only operational during the daytime but quiet at night. Noise data may be stored for frequently traveled routes such as a route between work and home. In one particular embodiment, the processor is configured to identify noise patterns in the route to thus learn the noise profile along a given route to thus be able to predict the noise to be expected at various points along the route. In other words, the processor may be configured to predict the expected noise based on the noise patterns in the route. As such, the processor is able to learn what to expect in terms of noise along a frequently traveled route. For example, if the route from home to work takes the vehicle through a tunnel, over a grated bridge, and past a construction site with loud jackhammers, the processor records these noises and notes their locations. On subsequent drives to work, the processor predicts the noise to be encountered in the tunnel, over the grated bridge and past the construction site. As the vehicle approaches each of the predictably noisy locations, the audio/speech-enhancement system 110 predicts the noise that is imminently expected and enhances the audio/speech signal by suppressing the noise just as the vehicle passes the noisy location.

In one embodiment, the vehicle further includes a radio frequency transceiver 150, e.g. a cellular data transceiver, which is coupled to the processor for downloading noise patterns from a shared server 160, which may also be a server cluster, server farm or any cloud-based data storage system. The shared server 160 may be accessible via the internet 200 through a cellular base station transceiver 210 at a nearby cell tower or through other access points (not shown). Noise data may be uploaded and downloaded, i.e. shared, amongst other users. Noise data may be grouped according to vehicle type. Noise data may be downloaded for new routes yet to be traveled. The download may occur automatically or in response to a user command. For example, upon programming a destination in a navigation system, the noise data for the route may be downloaded.

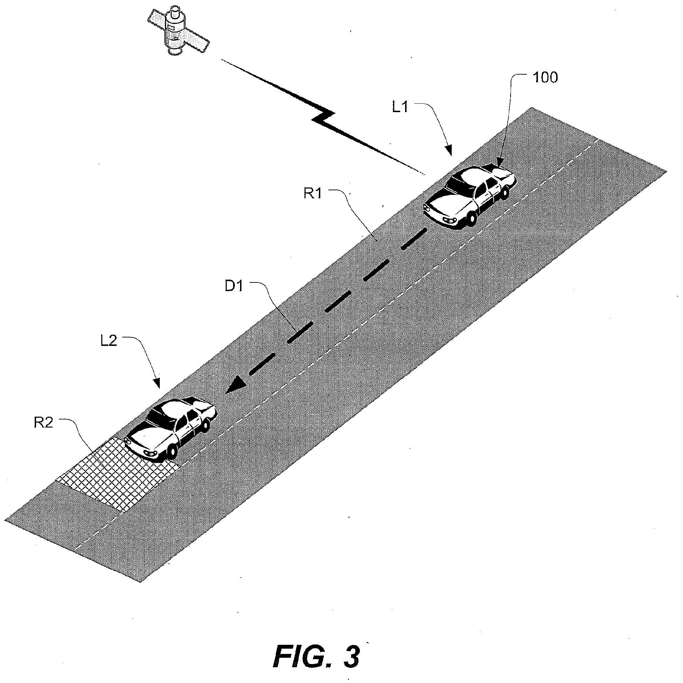

FIG. 3 depicts the vehicle 100 traveling along a section of roadway. In this example scenario, the roadway has a smooth (relatively noiseless) segment R1 and a rough (relatively noisy) segment R2. The rough (noisy) segment R2 may be a section of unpaved road, cobblestones, grating, gravel, or merely a badly cracked portion of asphalt that is noisier than smooth asphalt. The vehicle 100 in FIG. 3 is at location L1 when it determines its position using the GNSS receiver 140 onboard the vehicle 100. The vehicle 100 may be continually or periodically updating its position using the GNSS receiver 140 and checking its memory 114 or database of noisy locations. Because the vehicle 100 is traveling in direction D1, the vehicle 100 determines that it will be arriving imminently or very soon at location L2. Knowing its direction of travel D1 and its speed (i.e. its velocity vector) and knowing the path of the roadway ahead in the direction of travel D1, the processor 112 in the vehicle 100 determines that it will be at location L2 where the roadway has a rough (noisy) segment R2. The processor 112 in the vehicle 100 prepares to activate noise cancellation based on the expected noise to be encountered at L2. As the vehicle 100 arrives at L2, the processor 112 in the vehicle 100 initiates the noise cancellation based on the noise profile of R2 at location L2. When the vehicle 100 has passed L2, the noise cancellation may be terminated. This technique thus predicts the noise cancellation required at a given location prior to arriving at the noisy location, thus preparing the audio/speech enhancement system in advance so that the requisite cancellation signal is made ready to be applied to the audio/speech signal precisely at the time that the vehicle arrives at the noisy location. Predicting the noise in advance of arrival at the location where the noise is encountered enables the cancellation signal to be synchronized with the vehicle's arrival at the noisy location. As a result of this timely noise cancellation, the audio/speech signal is enhanced.

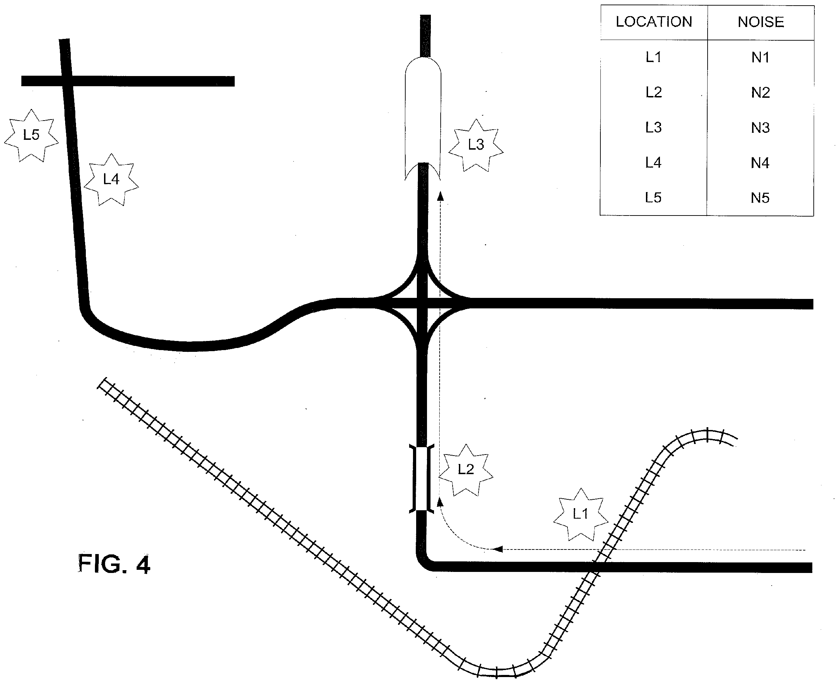

FIG. 4 depicts a database of noisy locations which may be stored in the memory 114 of the vehicle 100 or in a shared server 160 remotely accessible by the vehicle 100 via a wireless connection, i.e. using RF transceiver 150. The database may be a table, library or other data structure that stores locations, e.g. denoted L1, L2, L3, L4, L5 and corresponding noise profile data, e.g. denoted N1, N2, N3, N4, N5. Thus, for example, when the vehicle's projected or programmed route takes the vehicle past locations L1, L2 and L3, the processor 112 in the vehicle 100 can predict that it will encounter noise at L1 that has noise profile N1, then it will encounter noise at L2 having noise profile N2 and then it will encounter noise at L3 having noise profile N3. A vehicle taking a different route may also simultaneously encounter noise from two locations that are in close proximity to each other, such as L4 and L5. The audio/speech enhancement may be configured to enhance the speech signal by cancelling the noise from two noise profiles, e.g. N4 and N5, at the same time or in varying degrees depending on other factors such as time of day, vehicle speed, weather, prevailing wind direction, and how close each noisy location is to the vehicle as the vehicle passes by the two nearby locations.

In some embodiments, the enhancement is performed on a speech signal obtained from one or more the microphones within the vehicle (e.g. a speech signal derived from a telephone call or from voice commands spoken in the context of hands-free control of vehicle functions). In other embodiments, the enhancement techniques described above may be applied to an audio signal carrying audio content played by the speakers into the car in order to counteract the unwanted noise. The audio signal (of the audio content) may come from, for example, the radio, compact disc (CD) player, MP3 player, onboard hard disk containing digital audio media, or music streamed from a vehicle-connected mobile device. By predicting the amount of noise at an upcoming location, the audio signal can be enhanced using the predicted or expected amount of noise at the upcoming location. For the purposes of this specification, the expression "audio" is meant to encompass "speech".

In at least one embodiment, the processor of the system is coupled to a memory to store noise data for a route. In this or other embodiments, the processor is configured to identify noise patterns in the route. In any of the foregoing embodiments, the processor is configured to predict the expected noise based on the noise patterns in the route. In any of the foregoing embodiments, the system further has a radiofrequency transceiver coupled to the processor for downloading noise patterns from a shared server. In any of the foregoing embodiments, the location-determining subsystem is a Global Navigation Satellite System receiver.

The computer-readable medium described above may further comprise code to cause the memory to store noise data for a route. In this or other embodiments, the computer-readable medium may further have code to cause the processor to identify noise patterns in the route. In any of the foregoing embodiments, the computer-readable medium further includes code to predict the expected noise based on the noise patterns in the route. In any of the foregoing embodiments, the computer-readable medium further includes code to instruct a radiofrequency transceiver to download noise patterns from a shared server.

In the vehicle described, the processor may be coupled to a memory to store noise data for a route. In this or other embodiments, the processor may be configured to identify noise patterns in the route. In any of the foregoing embodiments, the processor is optionally configured to predict the expected noise based on the noise patterns in the route. In any of the foregoing embodiments, the vehicle includes a radiofrequency transceiver coupled to the processor for downloading noise patterns from a shared server. In any of the foregoing embodiments, the location-determining subsystem of the vehicle is a Global Navigation Satellite System receiver.

Any of the methods disclosed herein may be implemented in hardware, software, firmware or any combination thereof. Where implemented as software, the method steps, acts or operations may be programmed or coded as computer-readable instructions and recorded electronically, magnetically or optically on a fixed, permanent, non-volatile or non-transitory computer-readable medium, computer-readable memory, machine-readable memory or computer program product. In other words, the computer-readable memory or computer-readable medium comprises instructions in code which when loaded into a memory and executed on a processor of a computing device cause the computing device to perform one or more of the foregoing method(s).

A computer-readable medium can be any means that contain, store, communicate, propagate or transport the program for use by or in connection with the instruction execution system, apparatus or device. The computer-readable medium may be electronic, magnetic, optical, electromagnetic, infrared or any semiconductor system or device. For example, computer executable code to perform the methods disclosed herein may be tangibly recorded on a computer-readable medium including, but not limited to, a floppy-disk, a CD-ROM, a DVD, RAM, ROM, EPROM, Flash Memory or any suitable memory card, etc. The method may also be implemented in hardware. A hardware implementation might employ discrete logic circuits having logic gates for implementing logic functions on data signals, an application-specific integrated circuit (ASIC) having appropriate combinational logic gates, a programmable gate array (PGA), a field programmable gate array (FPGA), etc.

It is to be understood that the singular forms "a," "an," and "the" include plural referents unless the context clearly dictates otherwise. Thus, for example, reference to "a processor" includes reference to one or more of such processors.

This invention has been described in terms of specific embodiments, implementations and configurations which are intended to be exemplary only. Persons of ordinary skill in the art will appreciate, having read this disclosure, that many obvious variations, modifications and refinements may be made without departing from the inventive concept(s) presented herein. The scope of the exclusive right sought by the Applicant(s) is therefore intended to be limited solely by the appended claims.

## Claims

1. A speech-enhancement system for a vehicle (100), the system comprising:
a location-determining subsystem (140) configured to determine a first location (L1) of the vehicle (100) and to generate location data representing the first location (L1) of the vehicle (100); and
a speech-enhancement processor (112) for processing a speech signal, wherein the processor (112) is coupled to a memory (114) to store noise data for a route, the noise data collected by the vehicle (100) or obtained from an external source and including a noise frequency spectrum and location coordinates;
wherein the processor (112) is communicatively coupled to the location-determining subsystem (140) for receiving the location data and configured to identify noise patterns in the route;
wherein the processor (112) is configured to predict expected noise (N2) at a second location (L2) corresponding to a predicted location of the vehicle (100) before the vehicle is at the predicted location, the processor being configured to predict the expected noise based on the noise patterns in the route; and
wherein the processor (112) is further configured to suppress noise based on the expected noise (N2) when the vehicle (100) is at the second location (L2) to thereby enhance the speech signal.

2. The system of claim 1, further comprising a radiofrequency transceiver coupled to the processor for downloading noise patterns from a shared server.

3. The system of any one of claims 1 or 2, wherein the location-determining subsystem (140) is a Global Navigation Satellite System receiver.

4. A method, executed by a processor (112), in particular a speech-enhancement processor (112) of a vehicle (100), the method comprising:
- causing a memory (114) to store noise data for a route, the noise data collected by the vehicle (100) or obtained from an external source and including a noise frequency spectrum and location coordinates;
- receiving location data representing a first location (L1) of the vehicle (100) from a location-determining subsystem (140), in particular a location-determining subsystem (140) including a Global Navigation Satellite System receiver;
- causing the processor to identify noise patterns in the route;
- predicting expected noise (N2) at a second location (L2) corresponding to a predicted location of the vehicle (100) before the vehicle is at the predicted location, the predicting the expected noise being based on the noise patterns in the route; and
- suppressing noise based on the expected noise (N2) when the vehicle (100) is at the second location (L2) to thereby enhance a speech signal.

5. The method of claim 4, further comprising instructing a radiofrequency transceiver to download noise patterns from a shared server.

6. A non-transitory computer-readable medium comprising instructions in code which when loaded into a memory (114) and executed by a speech-enhancement processor (112) of a vehicle (100) cause the processor (112) to execute a method according any one of claims 4 or 5.

7. A vehicle (100) having a speech-enhancement system (110) according to any one of claims 1 to 3.

## Patentansprüche

1. Sprachverbesserungssystem für ein Fahrzeug (100), wobei das System aufweist:
ein Positionsbestimmungsteilsystem (140), das konfiguriert ist zum Bestimmen einer ersten Position (L1) des Fahrzeugs (100) und zum Erzeugen von Positionsdaten, die die erste Position (L1) des Fahrzeugs (100) repräsentieren; und
einen Sprachverbesserungsprozessor (112) zum Verarbeiten eines Sprachsignals, wobei der Prozessor (112) mit einem Speicher (114) gekoppelt ist, um Rauschdaten für eine Route zu speichern, wobei die Rauschdaten durch das Fahrzeug (100) gesammelt werden oder von einer externen Quelle erlangt werden und ein Rauschfrequenzspektrum und Positionskoordinaten umfassen;
wobei der Prozessor (112) mit dem Positionsbestimmungsteilsystem (140) kommunikativ gekoppelt ist zum Empfangen der Positionsdaten und konfiguriert ist zum Identifizieren von Rauschmuster in der Route;
wobei der Prozessor (112) konfiguriert ist zum Vorhersagen von erwartetem Rauschen (N2) an einer zweiten Position (L2), die einer vorhergesagten Position des Fahrzeugs (100) entspricht, bevor das Fahrzeug an der vorhergesagten Position ist, wobei der Prozessor konfiguriert ist zum Vorhersagen des erwarteten Rauschens basierend auf den Rauschmustern in der Route; und
wobei der Prozessor (112) weiter konfiguriert ist zum Unterdrücken von Rauschen basierend auf dem erwarteten Rauschen (N2), wenn das Fahrzeug (100) an der zweiten Position (L2) ist, um dadurch das Sprachsignal zu verbessern.

2. Das System gemäß Anspruch 1, das weiter einen Funkfrequenztransceiver aufweist, der mit dem Prozessor gekoppelt ist, zum Herunterladen von Rauschmustern von einem gemeinsam genutzten Server.

3. Das System gemäß einem der Ansprüche 1 oder 2, wobei das Positionsbestimmungsteilsystem (140) ein Empfänger eines globalen Navigationssatellitensystems (Global Navigation Satellite System) ist.

4. Verfahren, das durch einen Prozessor (112) ausgeführt wird, insbesondere einen Sprachverbesserungsprozessor (112) eines Fahrzeugs (100), wobei das Verfahren aufweist:
- Veranlassen eines Speichers (114) zum Speichern von Rauschdaten für eine Route, wobei die Rauschdaten durch das Fahrzeug (100) gesammelt werden oder von einer externen Quelle erlangt werden und ein Rauschfrequenzspektrum und Positionskoordinaten umfassen;
- Empfangen von Positionsdaten, die eine erste Position (L1) des Fahrzeugs (100) repräsentieren, von einem Positionsbestimmungsteilsystem (140), insbesondere einem Positionsbestimmungsteilsystem (140), das einen Empfänger eines globalen Navigationssatellitensystems umfasst;
- Veranlassen des Prozessors zum Identifizieren von Rauschmuster in der Route;
- Vorhersagen von erwartetem Rauschen (N2) an einer zweiten Position (L2), die einer vorhergesagten Position des Fahrzeugs (100) entspricht, bevor das Fahrzeug an der vorhergesagten Position ist, wobei das Vorhersagen des erwarteten Rauschens auf den Rauschmustern in der Route basiert; und
- Unterdrücken von Rauschen basierend auf dem erwarteten Rauschen (N2), wenn das Fahrzeug (100) an der zweiten Position (L2) ist, um dadurch ein Sprachsignal zu verbessern.

5. Das Verfahren gemäß Anspruch 4, das weiter ein Anweisen eines Funkfrequenztransceivers zum Herunterladen von Rauschmuster von einem gemeinsam genutzten Server aufweist.

6. Nichtflüchtiges computerlesbares Medium, das Anweisungen im Code aufweist, die bei einem Laden in einen Speicher (114) und Ausführen durch einen Sprachverbesserungsprozessor (112) eines Fahrzeugs (100) den Prozessor (112) veranlassen, ein Verfahren gemäß einem der Ansprüche 4 oder 5 auszuführen.

7. Fahrzeug (100) mit einem Sprachverbesserungssystem (110) gemäß einem der Ansprüche 1 bis 3.

## Revendications

1. Système d'amélioration de la parole pour un véhicule (100), le système comprenant :
un sous-système de détermination d'emplacement (140) configuré pour déterminer un premier emplacement (L1) du véhicule (100) et pour générer des données d'emplacement représentant le premier emplacement (L1) du véhicule (100) ; et
un processeur d'amélioration de la parole (112) pour traiter un signal de parole, dans lequel le processeur (112) est couplé à une mémoire (114) pour mémoriser des données de bruit pour un itinéraire, les données de bruit étant collectées par le véhicule (100) ou obtenues à partir d'une source externe et comprenant un spectre de fréquences de bruit et des coordonnées de localisation ;
dans lequel le processeur (112) est couplé en communication au sous-système de détermination d'emplacement (140) pour recevoir les données d'emplacement et configuré pour identifier les modèles de bruit dans l'itinéraire ;
dans lequel le processeur (112) est configuré pour prédire le bruit escompté (N2) à un deuxième emplacement (L2) correspondant à un emplacement prédit du véhicule (100) avant que le véhicule ne soit à l'emplacement prédit, le processeur étant configuré pour prédire le bruit escompté sur la base des modèles de bruit sur l'itinéraire ; et
dans lequel le processeur (112) est en outre configuré pour supprimer le bruit sur la base du bruit escompté (N2) lorsque le véhicule (100) se trouve au deuxième emplacement (L2) pour améliorer ainsi le signal vocal.

2. Système selon la revendication 1, comprenant en outre un émetteur-récepteur à radiofréquence couplé au processeur pour télécharger des modèles de bruit à partir d'un serveur partagé.

3. Système selon une quelconque des revendications 1 ou 2, dans lequel le sous-système de détermination de position (140) est un récepteur de système mondial de navigation par satellite.

4. Procédé, exécuté par un processeur (112), en particulier un processeur d'amélioration de la parole (112) d'un véhicule (100), le procédé comprenant les étapes consistant à :
- amener une mémoire (114) à mémoriser des données de bruit pour un itinéraire, les données de bruit étant collectées par le véhicule (100) ou obtenues à partir d'une source externe et comprenant un spectre de fréquence de bruit et des coordonnées de localisation ;
- recevoir des données de localisation représentant une première localisation (L1) du véhicule (100) à partir d'un sous-système de localisation (140), en particulier un sous-système de localisation (140) comprenant un récepteur de système mondial de navigation par satellite ;
- amener le processeur à identifier des modèles de bruit dans l'itinéraire ;
- prédire le bruit escompté (N2) à un deuxième emplacement (L2) correspondant à un emplacement prédit du véhicule (100) avant que le véhicule ne soit à l'emplacement prédit, la prédiction du bruit escompté étant basée sur les modèles de bruit sur l'itinéraire ; et
- supprimer le bruit en fonction du bruit escompté (N2) lorsque le véhicule (100) est au deuxième emplacement (L2) pour améliorer ainsi un signal vocal.

5. Procédé selon la revendication 4, comprenant en outre de donner instruction à un émetteur-récepteur à radiofréquence de télécharger des modèles de bruit à partir d'un serveur partagé.

6. Support non transitoire lisible par ordinateur comprenant des instructions en code qui, lorsqu'elles sont chargées dans une mémoire (114) et exécutées par un processeur d'amélioration de la parole (112) d'un véhicule (100), amènent le processeur (112) à exécuter un procédé selon une quelconque des revendications 4 ou 5.

7. Véhicule (100) possédant un système d'amélioration de la parole (110) selon une quelconque des revendications 1 à 3.
